Europäisches Patentamt

European Patent Office

Office européen des brevets

(19)

(11) Numéro de publication : **0 650 119 A1**

(12) # DEMANDE DE BREVET EUROPEEN

(21) Numéro de dépôt : **94402337.3**

(22) Date de dépôt : **18.10.94**

(51) Int. Cl.⁶ : **G06F 9/44**

(30) Priorité : **21.10.93 FR 9312569**

(43) Date de publication de la demande :
**26.04.95 Bulletin 95/17**

(84) Etats contractants désignés :
**BE CH DE ES FR GB IT LI SE**

(71) Demandeur : **CEGELEC**
**13, rue Antonin Raynaud**
**F-92300 Levallois-Perret (FR)**

(72) Inventeur : **Baradel, Christophe**
**10 rue des Malmaisons**
**F-75013 Paris (FR)**
Inventeur : **Lecaille, Eric**
**7 rue Henri Gatinot**
**F-92320 Chatillon (FR)**

(74) Mandataire : **Pothet, Jean Rémy Emile Ludovic**
**et al**
**c/o SOSPI**
**14-16 rue de la Baume**
**F-75008 Paris (FR)**

(54) **Gestionnaire de fenêtres notamment pour poste de contrôle/commande sous multifenêtrage.**

(57)     Un gestionnaire de fenêtres pour système de multifenêtrage comportant un serveur de fenêtrage (20) pour commander l'affichage de premières fenêtres réservées par des programmes clients à l'intérieur d'une seconde fenêtre réservée par le système. Le serveur maintient en mémoire une structure arborescente de données de fenêtrage ayant une racine (100) définissant la seconde fenêtre et des noeuds (110,120) définissant des premières fenêtres correspondantes. Le gestionnaire est agencé pour gérer une liste (50) d'identificateurs de premières fenêtres dans la racine, détecter, dans chaque noeud la présence ou l'abscence d'une donnée de contrôle (70) et en présence d'une telle donnée de contrôle pour un noeud correspondant à une première fenêtre particulière, gérer la disposition et la circulation des premières fenêtres sur la base de secondes données de fenêtrage (60) laissées sous contrôle de l'un des programmes clients.

FIG.10

EP 0 650 119 A1

L'invention porte sur un gestionnaire de fenêtres pour système de multifenêtrage comportant un serveur de fenêtrage destiné à commander l'affichage sur écran de premières fenêtres réservées par des programmes clients du système, le gestionnaire de fenêtres étant destiné à gérer la disposition et la circulation des premières fenêtres à l'intérieur d'une seconde fenêtre réservée par le système.

Un tel système de multifenêtrage est couramment utilisé dans les postes de contrôle/commande munis d'écrans graphiques. Un système de multifenêtrage très répandu sur le marché est connu sous le nom de "XWindow".

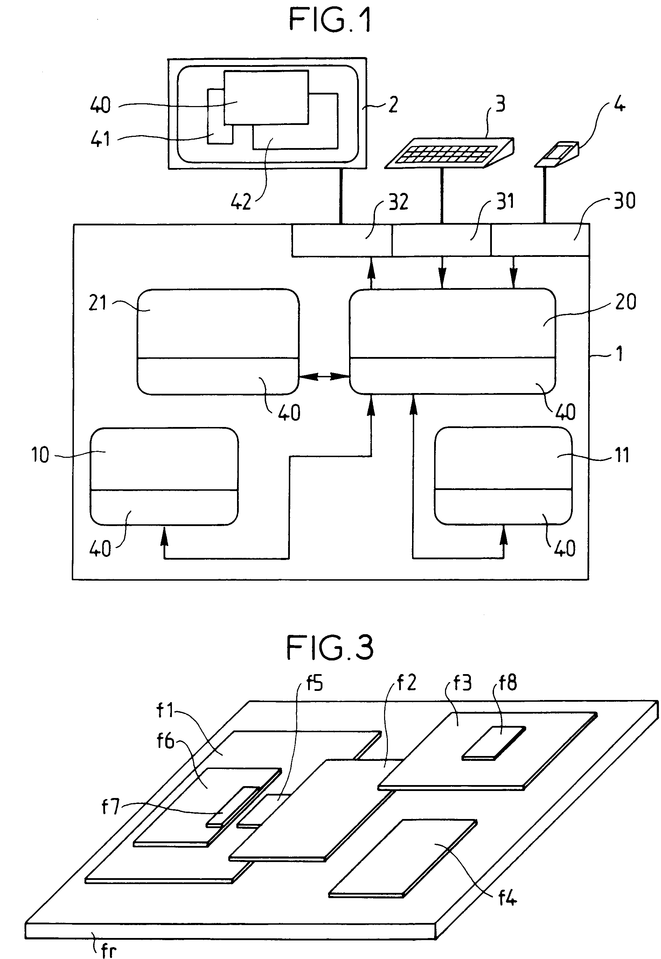

La figure 1 montre un poste de contrôle/commande comprenant un processeur 1, un écran graphique 2, un clavier 3, et un organe de désignation 4 connu sous le nom de "souris". Le système de multifenêtrage "XWindow" qui comprend un serveur de fenêtrage 20 connu sous le nom de "XServer" et un gestionnaire de fenêtres 21 connu sous le nom de "XWindowManager", fonctionne sur le processeur 1. Le système de multifenêtrage est exploité par deux programmes clients 10,11 qui sont classiquement appelés "XClient". Dans l'exemple de la figure 1, le système de multifenêtrage et les programmes clients du système résident dans le même processeur 1.

Les programmes clients 10,11, le serveur 20 et le gestionnaire 21 disposent chacun d'une librairie de fonctions 40 connue sous le nom de "Xlib" et l'exploitent pour communiquer entre eux selon un protocole défini dans l'ICCCM ("Inter-Client Communication Conventions Manual").

Le serveur 20 est en relation fonctionnelle avec l'écran 2, le clavier 3 et l'organe de désignation 4 au travers d'interfaces spécialisées 30,31,32.

Le système de multifenêtrage "XWindow" est destiné en premier lieu à prendre en charge la gestion des sorties graphiques sur l'écran 2 effectuées par les programmes clients 10,11. Ces programmes clients 10,11 sont donc déchargés de la gestion bas niveau de l'écran ce qui simplifie leur conception.

Pour cela, un programme client du système de multifenêtrage, réserve auprès du système une ou plusieurs zones 40,41,42 sur l'écran dans laquelle ou lesquelles ses sorties graphiques seront présentées. Ces zones d'écran, généralement rectangulaires, sont appelées fenêtres.

Ces fenêtres sont disposées par le système de multifenêtrage et plusieurs fenêtres réservées par le même programme client ou par différents programmes clients peuvent se chevaucher partiellement ou complètement. Toutes ces fenêtres sont disposées à l'intérieur d'une fenêtre particulière dite "fenêtre racine" correspondant généralement au fond de l'écran.

Les fenêtres réservées par le ou les programmes clients sont définies par une structure arborescente de données de fenêtrage maintenue en mémoire par le serveur, ces données servant de base pour la communication programme client-serveur et serveur-gestionnaire.

Cette structure arborescente a une racine qui définit la fenêtre racine réservée par le système et des noeuds ou feuilles qui définissent les fenêtres réservées par les programmes clients.

Il existe une hiérarchie entre la fenêtre racine et les fenêtres réservées par les programmes clients. Ces dernières peuvent être des fenêtres "filles" de la fenêtre racine encore appelées "fenêtres principales" ou "fenêtres de premier niveau". Un programme client a aussi la possibilité de réserver des fenêtres filles d'une fenêtre principale et ainsi de suite. Ces premières sont encore appelées "fenêtres de niveau 2". La hiérarchie de fenêtres est définie par la structure arborescente.

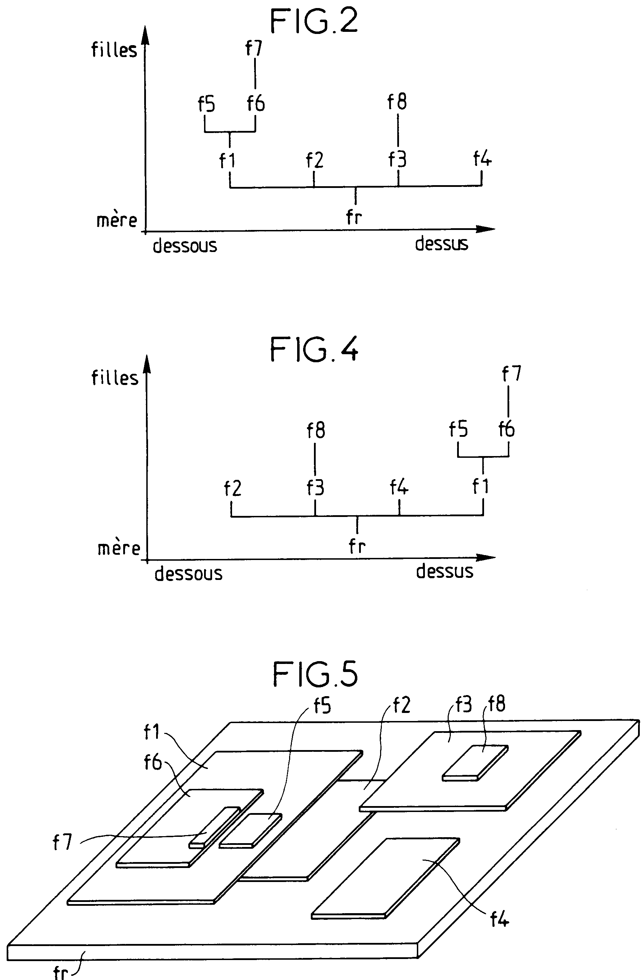

La figure 2 montre une hiérarchie de fenêtres f1 à f8 dépendant de la fenêtre racine fr. Dans cette hiérarchie, les fenêtres f1,f5,f6,f7, et f4, par exemple, sont réservées par un premier programme client. La fenêtre f2 est réservée par un second programme client. Les fenêtres f3 et f8 sont réservées par un troisième client. Les fenêtres f1,f2,f3,f4 sont des fenêtres principales ou fenêtres de niveau 1. Les fenêtres f5,f6 et f8 sont des fenêtres de niveau 2.

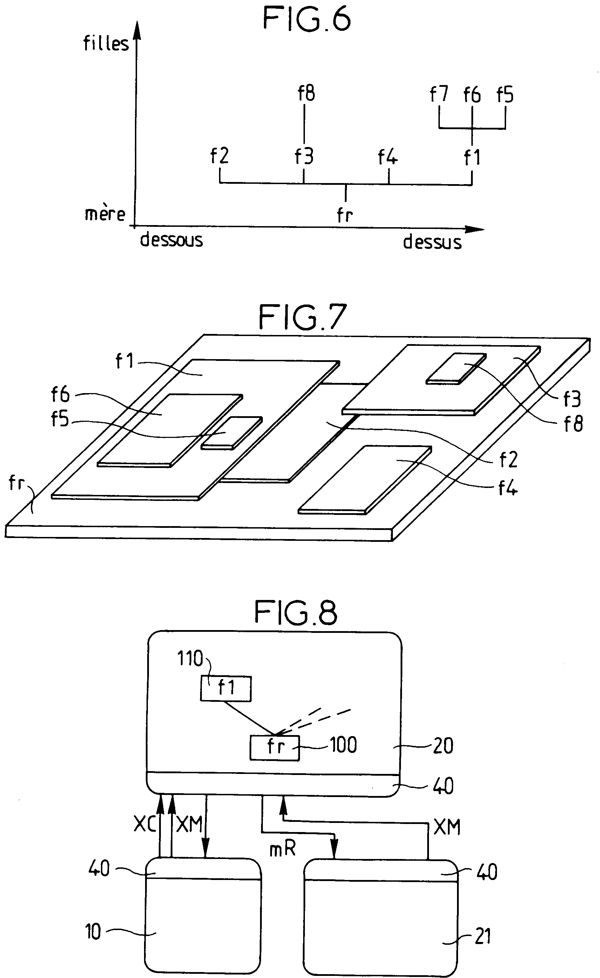

La figure 3 montre un exemple de disposition des fenêtres f1 à f8 à l'intérieur de la fenêtre racine fr selon la hiérarchie de la figure 2. Sur cette figure, la fenêtre principale f1 du premier programme client est recouverte (dessous) par la fenêtre principale f2 du second programme client. Une fonction, connue sous le nom de "XRaise", disponible dans la bibliothèque "Xlib" permet au premier programme client de rendre entièrement visible sa fenêtre f1 (dessus) de sorte que la fenêtre f1 recouvre alors la fenêtre f2. Le mouvement des fenêtres à l'écran est connu sous le nom de circulation. La figure 4 montre une nouvelle hiérarchie des fenêtres f1 à f8 et la figure 5 montre une disposition écran correspondante des fenêtres f1 à f8 après une circulation de la fenêtre f1. Une autre fonction, connue sous le nom de "XReparent", disponible dans la bibliothèque "Xlib" permet au premier programme client de modifier la hiérarchie des fenêtres, et par exemple de rattacher la fenêtre f7 directement à la fenêtre f1. La fenêtre f7 devient alors une fenêtre de niveau 2. Ce mouvement de fenêtres est connu sous le nom de "reparentage". La figure 6 montre une nouvelle hiérarchie de fenêtres f1 à f8 et la figure 7 montre une disposition écran correspondante des fenêtres f1 à f8 après un reparentage de fenêtres. Sur la figure 7, la fenêtre f7 est complètement recouverte (dessous) par la fenêtre f6.

C'est le serveur 20 qui reçoit et applique les requêtes de fenêtrages provenant d'un programme client et le gestionnaire 21 qui gère la disposition et la circulation des fenêtres réservées par ce programme client, seulement pour les fenêtres principales, de façon à partager au mieux la fenêtre racine entre les différentes fenêtres principales.

En se reportant à la figure 8, le fonctionnement du système de multifenêtrage est le suivant. Une première communication s'établit entre le programme client et le serveur pour la création d'une fenêtre principale f1. C'est à dire que le programme client 10 par une fonction XC connue sous le nom de "XCreateWindow", fournit au serveur 20 les données de fenêtrage de la fenêtre f1 relatives à l'identificateur de la fenêtre f1, sa taille, sa position sur l'écran, etc.... Ces données de fenêtrage sont maintenues par le serveur dans un noeud 110 de la structure arborescente qui a une racine 100 définissant la fenêtre racine fr. Puis le programme client, par une fonction XM connue sous le nom de "XMapWindow" demande au serveur l'affichage de la fenêtre f1 qu'il vient de créer. Une seconde communication s'établit entre le serveur et le gestionnaire 21. Le serveur informe le gestionnaire de la requête d'affichage XM par envoi d'un évènement mR connu sous le nom de "mapRequest". En réponse, à la réception de cet évènement, le gestionnaire modifie, le cas échéant, les données de fenêtrage définissant la fenêtre f1 et renvoie au serveur une décision d'affichage de cette fenêtre par la fonction XM "XMapWindow" basée, le cas échéant, sur les données de fenêtrage modifiées. En réponse, le serveur affiche la fenêtre à l'écran telle que définie par le gestionnaire, cette fenêtre pouvant éventuellement recouvrir partiellement ou totalement une autre fenêtre déjà affichée à l'écran.

Maintenant, dans le cadre d'un poste de contrôle/commande sous multifenêtrage "XWindow", il est souhaitable de pouvoir tenir visibles à l'écran dans une fenêtre principale à la demande d'un programme client du système de multifenêtrage, des informations critiques telles que des alarmes, nonobstant la présence d'autres fenêtres principales réservées par d'autres programmes susceptibles de recouvrir la fenêtre en question.

De par le fonctionnement du système de multifenêtrage "XWindow", il n'est pas prévu qu'un programme client particulier impose au gestionnaire une disposition particulière des fenêtres principales de manière à maintenir une fenêtre principale particulière (celle où sont présentées les informations critiques) entièrement visible à l'écran.

Le but de l'invention est d'apporter une solution à ce problème.

L'invention est basée sur un moyen apporté à chaque programme client du système de multifenêtrage pour accéder dynamiquement aux données de fenêtrage maintenues par le serveur et définissant toutes les fenêtres principales gérées par le gestionnaire. En effet, chaque programme client ne peut accéder, dans la structure arborescente, que les données de fenêtrage de la fenêtre racine et les données de fenêtrage des fenêtres principales qu'il a lui-même réservées. L'accès se fait par l'identificateur de la fenêtre. Toutefois, le gestionnaire peut accéder à toutes les données de fenêtrage de toutes les fenêtres principales du fait qu'il est renseigné à chaque requête d'affichage d'une fenêtre principale par un programme client.

A cet effet l'invention a pour objet un gestionnaire de fenêtres pour système de multifenêtrage comportant un serveur de fenêtrage destiné à commander l'affichage sur écran de premières fenêtres réservées par des programmes clients du système, le gestionnaire de fenêtres étant destiné à gérer la disposition et la circulation des premières fenêtres à l'intérieur d'une seconde fenêtre réservée par le système et le serveur étant agencé pour maintenir en mémoire une structure arborescente de premières données de fenêtrage sur la base desquelles le serveur de fenêtrage communique avec le gestionnaire de fenêtres d'écran et avec les programmes clients, cette structure ayant une racine définissant la seconde fenêtre et des noeuds définissant des premières fenêtres correspondantes, caractérisé en ce que le gestionnaire est agencé pour:

a) gérer dans la racine une première liste d'identificateurs de premières fenêtres,

b) détecter, dans chaque noeud, la présence ou l'absence d'une donnée de contrôle,

c) et en présence d'une telle donnée de contrôle dans un noeud définissant une première fenêtre particulière, gérer la disposition et la circulation des premières fenêtres sur la base de secondes données de fenêtrage laissées sous contrôle de l'un des programmes clients.

L'invention apporte les avantages suivants.

Pour un système de multifenêtrage existant du type "XWindow", seul le gestionnaire est modifié.

Ce système de multifenêtrage modifié peut être exploité par plusieurs programmes clients en même temps, y compris des programmes du commerce tels que tableurs, dont l'un au moins est privilégié, c'est à dire ayant la faculté de maintenir visible entièrement à l'écran une fenêtre principale qu'il a réservée. Grâce à l'invention, il est possible à un client intégrateur de faire de la composition d'interface, c'est-à-dire par exemple intégrer des fenêtres d'autres clients dans sa propre interface Homme-Machine.

La modification du gestionnaire n'altère pas le fonctionnement standard du système de multifenêtrage.

L'invention est maintenant décrite en détail ci-après en référence aux dessins.

La figure 1 est une représentation schématique d'un poste de contrôle/commande connu fonctionnant sous multifenêtrage.

La figure 2 illustre une première hiérarchie de fenêtres.

La figure 3 illustre les fenêtres disposées sur un écran selon la hiérarchie de la figure 2.

La figure 4 illustre une seconde hiérarchie de fenêtres.

La figure 5 illustre les fenêtres disposées sur un écran selon la hiérarchie de la figure 4.

La figure 6 illustre une troisième hiérarchie de fenêtres.

La figure 7 illustre les fenêtres disposées sur un écran selon la hiérarchie de la figure 6.

La figure 8 montre le fonctionnement d'un système de multifenêtrage connu.

La figure 9 montre un premier fonctionnement du système de multifenêtrage selon l'invention.

La figure 10 montre un second fonctionnement du système de multifenêtrage selon l'invention.

La figure 11 montre un troisième fonctionnement du système de multifenêtrage selon l'invention.

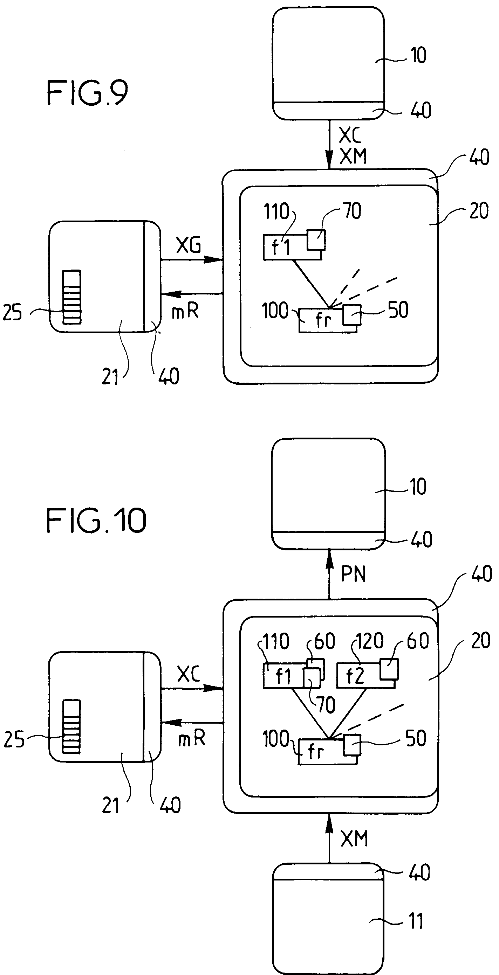

Sur les figures 9 et 10, le système de multifenêtrage représenté est un système "XWindow" modifié selon l'invention. Il comporte donc un serveur 20 standard mais un gestionnaire 21 modifié. Il est exploité par un programme client 10 qui sera appelé par la suite client intégrateur. Le client intégrateur réserve une fenêtre principale f1 devant être visible entièrement à l'écran nonobstant la présence d'autres fenêtres principales. Le serveur communique avec le gestionnaire et le client intégrateur par la bibliothèque de fonctions 40. Dans l'exemple décrit, on considère un seul client intégrateur mais l'invention peut être appliquée au cas de plusieurs clients intégrateurs exploitant en même temps le système de multifenêtrage.

Le système de multifenêtrage est modifié de la façon suivante. Le protocole de communication gestionnaire-client intégrateur est étendu. Un mécanisme particulier d'identification, un mécanisme de publication des fenêtres principales, un mécanisme particulier de surcharge des attributs des fenêtres principales, un mécanisme particulier de gestion des transitoires sont prévus dans le gestionnaire.

A- Extension du protocole de communication

La communication entre le gestionnaire et le client intégrateur est basée sur le protocole défini dans l'ICCCM (mécanisme standard de "XWindow des atomes "Atoms", des propriétés "Properties" et des messages clients "ClientMessages").

Le protocole de communication est étendu par le fait que la racine 100 définissant la fenêtre racine fr comporte une nouvelle propriété 50 accessible par tout programme client du système. Cette nouvelle propriété 50 dont l'atome est appelé WM_WINDOWS a une valeur du type "XWMWindows" et une structure du type défini comme suit:

```
typedef struct {
int count;
Window wm_windows[];
}XWMWindows;
```

où "count" est une variable pour comptabiliser un nombre de fenêtres principales et wm_windows[] est une liste d'identificateurs de fenêtres principales.

Le protocole est encore étendu par le fait que chaque noeud 110 définissant une fenêtre principale gérée par le système comporte une nouvelle propriété 60. Cette nouvelle propriété 60 dont l'atome est appelé WM_HINTS_OVERRIDE a une valeur du type "XWMHintsOverride" et une structure du type défini comme suit:

```
typedef struct {
Window    delegate;
char      title;
char      move;
char      close
char      resize;
char      circulate;
char      iconify;
char      normalOverrride;
```

```
Window      parent;
int         x,y,width,height;
char        mapped;
}XWMHintsOverride;
```

où

"delegate" est une variable qui contient l'identificateur d'une des fenêtres principales réservées par le client intégrateur (celle qui sert au mécanisme d'identification intégrateur/gestionnaire de fenêtres) qui veut manipuler la fenêtre principale considérée,

"title" est une variable qui indique au gestionnaire si la fenêtre principale considérée doit être ou non décorée avec une barre de titre,

"move" est une variable qui indique au gestionnaire si l'opérateur est ou non autorisé à déplacer de façon interactive la fenêtre principale considérée,

"close" est une variable qui indique au gestionnaire si l'opérateur est ou non autorisé à fermer de façon interactive la fenêtre principale considérée,

"resize" est une variable qui indique au gestionnaire si l'opérateur est ou non autorisé à redimensionner de façon interactive la fenêtre principale considérée,

"circulate" est une variable qui indique au gestionnaire si l'opérateur est ou non autorisé à faire circuler la fenêtre principale considérée,

"iconify" est une variable qui indique au gestionnaire si un icône doit ou non apparaître à l'écran au moment de la fermeture de la fenêtre principale considérée,

"normalOverride" est une variable qui indique si la fenêtre principale considérée doit être ou non gérée de manière habituelle par le gestionnaire,

"parent" est une variable qui contient l'identificateur de la fenêtre désignée comme mère de la fenêtre principale considérée,

"x,y,width,height" sont des variables qui indiquent au gestionnaire la position imposée et la taille imposée de la fenêtre principale considérée,

"mapped" est une variable qui indique au gestionnaire si la fenêtre principale considérée doit être ouverte ou fermée.

Le protocole est encore étendu par le fait que le noeud 110 définissant une fenêtre principale particulière réservée par le client intégrateur comporte en plus une autre propriété 70. Cette nouvelle propriété dont l'atome est appelé WM_DELEGATE a une valeur du type booléen par exemple et identifie, par l'intermédiaire d'une de ses fenêtres, le client intégrateur.

B-Mécanisme d'identification

Ce mécanisme a pour objet de tenir informé le gestionnaire de la présence d'un client intégrateur. Sur la figure 9, le programme client 10 particulier a réservé une fenêtre principale f1 par la fonction XC ("XCreateWindow"). Ce programme client va maintenant se faire connaître auprès du gestionnaire de fenêtres comme étant un client intégrateur. Le fonctionnement du mécanisme d'identification est le suivant.

Le programme client 10 place la propriété 70 "WM_DELEGATE" dans le noeud 110 définissant la fenêtre f1 par la fonction XC ("XChangeProperty"), puis requiert auprès du serveur l'affichage de cette fenêtre par la fonction XM ("XMapWindow").

En réponse à la demande d'affichage, le serveur 20 envoie un évènement standard mR "maprequest" au gestionnaire 21 pour l'avertir que la fenêtre f1 est à afficher.

En réponse à la réception de l'évènement, le gestionnaire 21 modifié est agencé pour consulter les données de fenêtrage du noeud 110 par la fonction XG ("XGetWindowProperty") afin de détecter la présence ou l'absence de la propriété 70. Dans le cas où il détecte la présence de celle-ci, il insère l'identificateur de la fenêtre f1 dans une table 25 qu'il maintient en mémoire.

A ce stade, il apparaît qu'un programme client peut devenir client intégrateur de façon dynamique, seulement par le fait de placer la propriété 70 dans un noeud définissant une fenêtre principale. Ce mécanisme d'identification est déclenché sur la base de la réception d'un évènement indicatif d'un changement de propriété ("PropertyNotify") intervenant sur un noeud ou sur la racine de la structure. Pour recevoir un tel évènement, le gestionnaire doit préalablement en informer le serveur par la fonction standard "XSelectInput".

C-Mécanisme de publication

Ce mécanisme a pour objet de renseigner le client intégrateur sur l'identité des fenêtres principales gérées par le gestionnaire 21. Sur la figure 10, un autre programme 11 client du système mais non intégrateur réserve maintenant une fenêtre principale f2 par la fonction "XCreate". Le fonctionnement du mécanisme de publication identification est le suivant.

Le programme client 11 demande au serveur l'affichage de sa fenêtre f2 par la fonction XM ("XMapWindow").

Le serveur 20 envoie un évènement mR au gestionnaire 21 pour l'informer qu'une nouvelle fenêtre principale doit être affichée à l'écran.

En réponse à la réception de l'évènement mR, le gestionnaire 21 modifié est agencé pour mettre à jour la valeur de la propriété 50 dans la racine 100 définissant la fenêtre racine fr par la fonction XC ("XChangeProperty"). La mise à jour porte sur l'incrémentation de la variable "count" et l'insertion de l'identificateur de la fenêtre f2 dans la liste "wm_windows[]".

Le serveur 20 envoie un évènement PN ("PropertyNotify") au client intégrateur l'informant de la modification de la propriété 50.

D-Mécanisme de surcharge

Ce mécanisme a pour objet d'ajouter la propriété 60 dans chaque noeud correspondant à une fenêtre principale réservée par un programme client du serveur, y compris l'intégrateur. Le fonctionnement du mécanisme de surcharge est le suivant.

Sur la figure 10, en réponse à la réception de l'évènement mR, le gestionnaire 21 ajoute la propriété 60 (WM_HINTS_OVERRIDE") au noeud 121 correspondant à la fenêtre principale réservée par le programme client 11. Cette propriété 60 est initialisée par le gestionnaire avec des valeurs par défaut. Il est à noter que le gestionnaire effectue le même traitement sur le noeud 110 lorsque l'intégrateur 10 réserve la fenêtre principale f1.

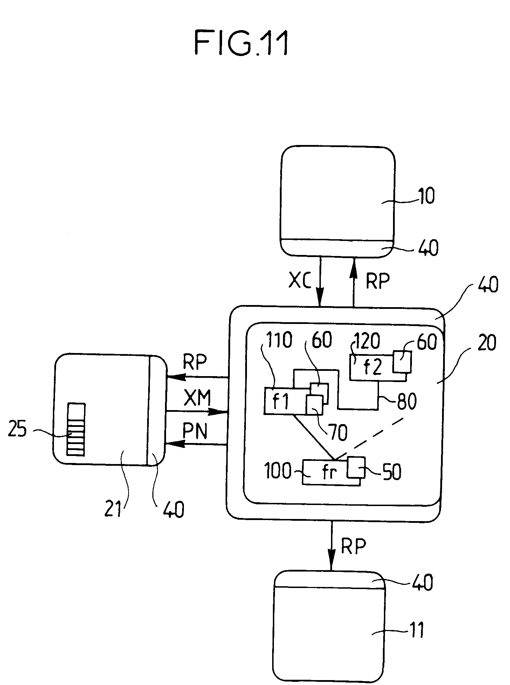

Maintenant en réponse à l'évènement PN, le client intégrateur 10 consulte la propriété 50 dans la racine 100. Il récupère l'identificateur de la fenêtre f2 qui vient d'être réservée par le programme client 11. A ce stade, sur la figure 11, l'intégrateur peut accéder à la propriété 60 dans le noeud 120. Il positionne la propriété 60 du noeud 120 aux valeurs de son choix, par exemple pour effectuer un reparentage par modification de la variable "parent" indiquée par le lien 80, par la fonction XC ("XChangeProperty").

Le serveur 20 envoie un évènement PN ("PropertyNotify") au gestionnaire pour l'informer que la propriété 60 de la fenêtre f2 a changé.

Le gestionnaire prend en compte les nouvelles valeurs de la propriété 60 de la fenêtre f2 et envoie l'ordre d'affichage correspondant au serveur par les fonctions Xlib adéquates ("XMapWindow","XReparentWindow",...).

Le serveur affiche la fenêtre f2 dont la configuration est donnée par la propriété 60. Le serveur 20 envoie des évènements RP ("ReparentNotify, ConfigureNotify" et/ou "MapNotify") au gestionnaire 21, au client intégrateur 10 et au programme client 11 qui ont demandé au serveur de les tenir informé des changements intervenus sur la fenêtre f2 par la fonction "XSelectInput".

E-Mécanisme de gestion des transitoires

Au démarrage du gestionnaire de fenêtres, celui-ci demande au serveur de lui communiquer la liste des identificateurs des fenêtres principales connues du serveur par la fonction "XQueryTree". En plus de ses fonctions habituelles, le gestionnaire doit rechercher dans cette liste, toutes les fenêtres dont le noeud correspondant porte la propriété 70 pour mettre à jour sa table 25, ajouter la propriété 60 à chaque noeud correspondant à une fenêtre principale ainsi que la propriété 50 dans le noeud 100 associé à la fenêtre racine.

A l'arrêt du gestionnaire de fenêtres, celui-ci doit détruire les propriétés 60 associées aux fenêtres principales, la propriété 50 associée à la fenêtre racine et réorganiser les fenêtres principales par rapport à la fenêtre racine. Par ailleurs, le client intégrateur est prévenu de l'arrêt du gestionnaire sur réception de l'évènement "PropertyNotify" signalant la destruction de la propriété 50.

Pour signaler au gestionnaire qu'il va arrêter sa fonction d'intégrateur, un programme client doit détruire la propriété 70 qu'il avait ajoutée à une ou des fenêtres principales et attendre la réception d'un évènement envoyé par le gestionnaire .

Sur réception de l'évènement "PropertyNotify" lié à la destruction de la propriété 70, le gestionnaire remet en état les données de fenêtrage des fenêtres sous contrôle du client intégrateur ayant posé la propriété 70 et envoie un évènement client, via la fonction Xlib "XSendEvent", au client intégrateur lui indiquant qu'il peut s'arrêter (le champ message-type de cet évènement étant l'atome WM_DELEGATE).

## Revendications

1. ) Un gestionnaire de fenêtres pour système de multifenêtrage comportant un serveur de fenêtrage (20) destiné à commander l'affichage sur écran de premières fenêtres réservées par des programmes clients (10,11) du système, le gestionnaire de fenêtres (21) étant destiné à gérer la disposition et la circulation des premières fenêtres à l'intérieur d'une seconde fenêtre réservée par le système et le serveur étant agencé pour maintenir en mémoire une structure arborescente de données de fenêtrage sur la base desquelles le serveur de fenêtrage communique avec le gestionnaire de fenêtres d'écran et avec les programmes clients, cette structure ayant une racine (100) définissant la seconde fenêtre et des noeuds (110,120) définissant des premières fenêtres correspondantes, _caractérisé_ en ce le gestionnaire est agencé pour:

a) gérer dans la racine (100) une première liste (50) d'identificateurs de premières fenêtres,

b) détecter, dans chaque noeud (110,120), la présence ou l'absence d'une donnée de contrôle (70),

c) et en présence d'une telle donnée de contrôle dans un noeud définissant une première fenêtre particulière, gérer la disposition et la circulation des premières fenêtres sur la base de secondes données de fenêtrage (60) laissées sous contrôle de l'un des programmes clients.

2. ) Un système de multifenêtrage comportant un gestionnaire de fenêtres selon la revendication 1.

3. ) Un poste de contrôle/commande comprenant un écran de visualisation (2) relié à un processeur (1) sous la commande d'un système de multifenêtrage selon la revendication 2.

# FIG.1

# FIG.3

# FIG.2

filles

f7

f5    f6    f8

f1    f2    f3    f4

fr

mère

dessous    dessus

# FIG.4

filles

f7

f8    f5    f6

f2    f3    f4    f1

fr

mère

dessous    dessus

# FIG.5

f5    f2    f3    f8

f1

f6

f7

f4

fr

# FIG.6

filles

f8                    f7  f6  f5

f2        f3        f4        f1

mère

fr

dessous                    dessus

# FIG.7

f1

f6
f5

fr

f3
f8

f2

f4

# FIG.8

110

f1

fr    100    20

40

XC  XM

mR    XM

40    40

10    21

FIG.9

FIG.10

# FIG.11

EP 0 650 119 A1

Office européen
des brevets

**RAPPORT DE RECHERCHE EUROPEENNE**

Numero de la demande

EP 94 40 2337

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 408 391 (HITACHI) 16 Janvier 1991<br>* colonne 2, ligne 24 - ligne 47 *<br>* colonne 6, ligne 49 - colonne 7, ligne 37 *<br>* colonne 8, ligne 49 - ligne 58 *<br>--- | 1-3 | G06F9/44 |
| A | US-A-5 107 443 (RANDALL ET AL) 21 Avril 1992<br>* colonne 3, ligne 51 - colonne 4, ligne 21 *<br>* colonne 15, ligne 17 - colonne 19, ligne 16 *<br>----- | 1-3 | |

**DOMAINES TECHNIQUES RECHERCHES (Int.Cl.6)**

G06F

Le présent rapport a été établi pour toutes les revendications

| Lieu de la recherche | Date d'achèvement de la recherche | Examinateur |
|---|---|---|
| LA HAYE | 25 Novembre 1994 | Brandt, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 01.82 (P04C02)